# EUROPEAN PATENT SPECIFICATION

(11) **EP 3 299 756 B1**
(45) Date of publication and mention of the grant of the patent: **30.12.2020**
(21) Application number: 17200788.2
(22) Date of filing: 27.01.2014
(51) Int. Cl.: F25D 29/00

(54) **REFRIGERATOR**
KÜHLSCHRANK
RÉFRIGÉRATEUR

(30) Priority: 27.03.2013 KR 20130032525
(43) Date of publication of application: 28.03.2018
(62) Document number(s) of the earlier application(s) in accordance with Art. 76 EPC: 14152587.3 / 2 784 419
(73) Proprietor: LG Electronics Inc., Seoul 07336 (KR)
(72) Inventor: RYU, Inhwan, Seoul 153-802 (KR); CHA, Minjoo, Seoul 153-802 (KR); YANG, Hyein, Seoul 153-802 (KR)
(74) Representative: Ter Meer Steinmeister & Partner

(56) References cited:
- JP-A- 2003 207 258
- JP-A- 2004 183 987
- KR-A- 20100 059 621
- US-A1- 2003 164 754
- US-A1- 2006 096 303

## Description

### BACKGROUND OF THE INVENTION

### Field of the Invention

The present invention relates to a refrigerator, and more particularly to a refrigerator which may provide a user with information related to food stored in the refrigerator.

### Discussion of the Related Art

In general, a refrigerator is an apparatus that supplies cold air generated via driving of a refrigeration cycle and serves to store food in a low temperature state.

Conventional refrigerators may implement only a simple function of storing food in a low temperature state. However, in recent years, a need for additional functions except for a food storage function is increasing.

A refrigerator is configured to receive and store certain items and requires a user to open a refrigerator door in order to check the interior of the refrigerator. Moreover, if the user does not know the quantities and kinds of food stored in a refrigerator when trying to buy food, this may cause inconvenience because the user may buy food already stored in the refrigerator or fail to buy necessary food.

Therefore, various research is currently being conducted to solve the above-described user inconvenience.

US 2006/0096303 A1 describes a refrigerator that includes a camera for imaging the interior while the door is shut. In an example, a light source can be turned on when door is shut, and imaging is performed. In another example, the refrigerator system includes a camera mounted on door, and a camera mounted in interior compartment, and light sources.

JP 2003 207258 A describes a refrigerator having a first camera facing the outside in the refrigerator compartment, and a second camera provided in the refrigerator compartment door.

KR 2010 0059621 A describes a refrigerator having a camera installed at the refrigerator door.

US 2003/0164754 A1 describes an apparatus for registering and supervision of the positions and time of storage of articles entered into a refrigerator having cameras.

JP 2004 183987 A describes a refrigerator having a camera for photographing the contents of the door, and a camera for photographing the contents stored in the refrigerator main body.

### SUMMARY OF THE INVENTION

Accordingly, the present invention is directed to a refrigerator that substantially obviates one or more problems due to limitation and disadvantages of the related art.

One object of the present invention is to provide a refrigerator which may provide a user with information related to food stored in the refrigerator.

Another object of the present invention is to provide a refrigerator which may provide a user with an image as if the user opens the refrigerator.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The invention is indicated in the independent claim. The dependant claim indicates a further embodiment.

To achieve these objects and other advantages and in accordance with the purpose of the present invention, as embodied and broadly described herein, a refrigerator includes the features described in claim 1.

### BRIEF DESCRIPTION OF THE DRAWINGS

The accompanying drawings, which are included to provide a further understanding of the present invention and are incorporated in and constitute a part of this application, illustrate embodiment(s) of the invention and together with the description serve to explain the principle of the invention. In the drawings:
FIG. 1 is a perspective view of a refrigerator according to the present invention;
FIG. 2 is a control block diagram of a terminal according to the present invention;
FIG. 3 is a schematic view of a refrigerator according to one embodiment of the present invention;
FIG. 4 is a control block diagram with regard to FIG. 3;
FIG. 5 is an explanatory view of a door rotation drive unit shown in FIG. 3;
FIG. 6 is a schematic explanatory view of rotation of a refrigerator door;
FIG. 7 is a view showing a plurality of pictures;
FIG. 8 is a view showing a state in which the pictures of FIG. 7 are corrected and transmitted to a terminal;
FIG. 9 is a view showing an implementation example that a user is usable in the state of FIG. 8;
FIG. 10 is a control flowchart showing a picture taking process based on an elapsed time when a door is open according to one embodiment;
FIG. 11 is a control flowchart showing a picture taking process based on a rotation position of a door when the door is open according to one embodiment;
FIG. 12 is a control flowchart showing a picture taking process based on an elapsed time when a door is closed according to one embodiment;
FIG. 13 is a control flowchart showing a picture taking process based on a rotation position of a door when the door is closed according to one embodiment;
FIG. 14 is a schematic view of a refrigerator according to another embodiment of the present invention;
FIG. 15 is a control block diagram with regard to FIG. 14;
FIG. 16 is a view showing a state in which pictures are corrected and transmitted to a terminal according to another embodiment of the present invention;
FIG. 17 is a control flowchart according to another embodiment of the present invention;
FIG. 18 is a schematic view of a refrigerator according to a further embodiment of the present invention; and
FIG. 19 is a control block diagram according to a further embodiment of the present invention.

### DETAILED DESCRIPTION OF THE INVENTION

Hereinafter, exemplary embodiments of the present invention that may realize the above-described objects concretely will be described with reference to the accompanying drawings.

In the drawings, the shape, size, or the like of components may be exaggerated for clarity and convenience. In addition, the terms particularly defined in consideration of configurations and operations of the present invention may be replaced by other terms based on intensions of those skilled in the art or customs. The meanings of these terms may be construed based on the overall content of this specification.

According to the present invention, a camera is installed to a door that is a movable component of a refrigerator, whereby information related to the interior of a storage compartment may be acquired via the camera. That is, although the interior of the storage compartment is in a stationary state, the camera may be moved along with the door, and thus a region that may be imaged by the camera is variable. As a result, pictures of various positions in the interior of the storage compartment may be acquired via a single camera.

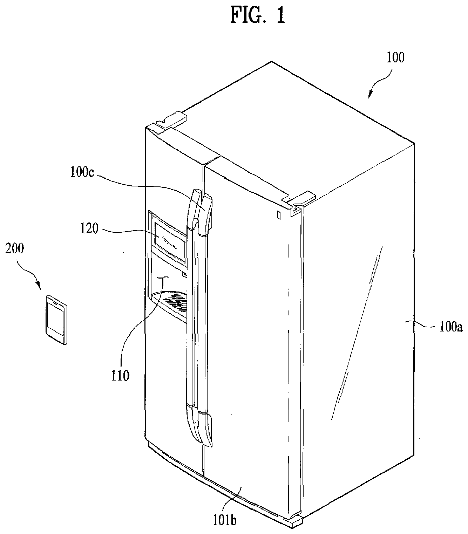

As exemplarily shown in FIG. 1, the refrigerator according to the present invention, designated by reference numeral 100, includes a main body 100a, a door 101b installed to a front surface of the main body 100a, and a handle 100c mounted to the door 101b. The door 101b may be provided with a dispenser 110 that dispenses cold water or ice, and a display unit 120 that provides the user with various information related to, e.g., food stored in the refrigerator 100, the display unit 120 also serving to transmit user input information to other devices.

More specifically, the display unit 120 may have various forms so long as it can display prescribed information and enables touch input of a prescribed instruction. In one example, the display unit 120 may take the form of a touchscreen that realizes simultaneous input and display.

The display unit 120 may be separably coupled to a front surface of the door 101b. Thus, the user may attach or detach the display unit 120 to or from the refrigerator 100 as needed.

In the present invention, prescribed information displayed on the display unit 120 may be transmitted to a terminal 200 that is connected to the refrigerator 100 through a network. The terminal 200 may take the form of a smart-phone that is not integrated with the refrigerator 100, but independent of the refrigerator 100 to allow the user to carry the terminal 200 to a remote place where the refrigerator 100 is not present.

Accordingly, the user who possesses the terminal 200 may recognize information related to the interior of the refrigerator 100 even if the user does not access the refrigerator 100.

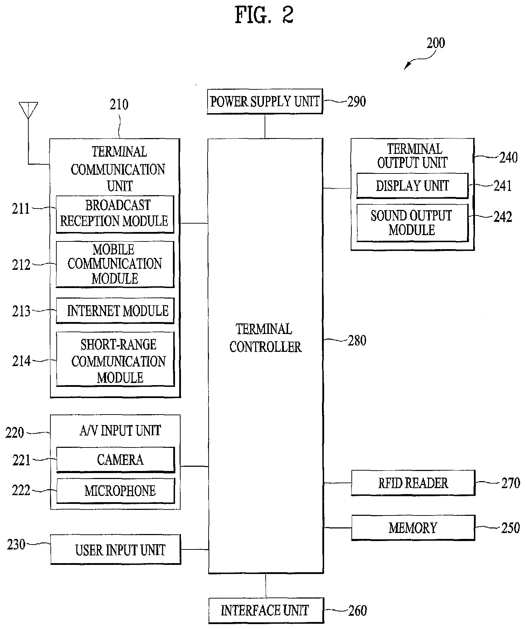

With reference to FIG. 2, the terminal 200 according to the present invention may include a terminal communication unit 210, an Audio/Video (A/V) input unit 220, a user input unit 230, a terminal output unit 240, a memory 250, an interface unit 260, a Radio Frequency Identification (RFID) reader 270, a terminal controller 280, and a power supply unit 290, for example. Note that components shown in FIG. 2 are not essential, and the terminal 200 having a greater or less number of components may be employed.

Hereinafter, the aforementioned components will be described in order.

The terminal communication unit 210 may include one or more modules to enable use of the Internet between the terminal 200 and a wireless communication system or in an Internet protocol network in which the terminal 200 is located.

For example, the terminal communication unit 210 may include a broadcast reception module 211, a mobile communication module 212, an Internet module 213, and a short-range communication module 214.

The broadcast reception module 211 receives broadcast signals and/or broadcast information from an external broadcast management server through a broadcast channel under control of the terminal controller 280, and plays back the same on a display module 241.

The mobile communication module 212 implements transmission/reception of wireless signals with at least one of a base station, an external terminal, and a server through a mobile communication network. The wireless signals may include voice signals, video call signals, or various other data based on transmission/reception of text/multimedia messages.

The Internet module 213 refers to a module for wired/wireless Internet connection. Wireless Internet technologies may include Wireless LAN (WLAN)(Wi-Fi), wireless broadband (WiBro), World Interoperability for Microwave Access (WiMAX), High Speed Downlink Packet Access (HSDPA), and the like.

The short-range communication module 214 refers to a module for short-range communication. Short-range communication technologies may include Bluetooth, Radio Frequency Identification (RFID), Infrared Data Association (IrDA), Ultra Wideband (UWB), ZigBee, and the like.

The A/V input unit 220 serves to input audio signals and video signals, and may include a camera module 221 and a microphone 222, for example.

The camera module 221 processes image information including, e.g. a still image or a moving image captured by an image sensor in a video call mode or an image capture mode. The processed image information may be displayed on the display module 241.

Image data processed in the camera module 221 may be stored in the memory 250, or may be transmitted to, e.g., an external terminal through the terminal communication unit 210. Two or more camera modules 221 may be provided according to use environments.

The microphone 222 receives an external sound signal, e.g., in a call mode, a recording mode or a voice recognition mode, and processes the same into electrical voice data.

The user input unit 230 generates input data to allow the user to control operation of the terminal 200. The user input unit 230 may include a keypad, a direction key, a dome switch, a touchpad (constant-pressure/capacitive), a jog wheel, a jog switch, and the like.

The terminal output unit 240 serves to generate visual or auditory output, and may include the display module 241 and a sound output module 242, for example.

The display module 241 displays (outputs) information processed in the terminal 200.

For example, when displaying information related to the terminal 200 and the refrigerator 100, the display module 241 of the terminal 200 may display the interior state of the refrigerator 100.

The display module 241 may include at least one of a Liquid Crystal Display (LCD), a Thin Film Transistor Liquid Crystal Display (TFT LCD), an Organic Light Emitting Diode (OLED), a flexible display, and a 3D display.

If the display module 241 and a sensor to sense a touch motion (hereinafter referred to as 'a touch sensor') are constructed in a layered structure (hereinafter referred to as 'a touchscreen'), the display module 241 may be used as an input device as well as an output device.

The touch sensor may take the form of a touch film, a touch sheet, or a touch pad, for example.

The touch sensor may be configured to convert, e.g., a pressure applied to a specific portion of the display module 241 or a variation of capacitance generated from the specific portion of the display module 241 into an electrical input signal. The touch sensor may be configured to detect a touch pressure applied to the display module 241 as well as a touched location and an area of the touched location.

When a touch input is generated with respect to the touch sensor, the signal(s) corresponding to the touch input is transmitted to a touch controller (not shown). The touch controller (not shown) processes the signal(s), and transmits data corresponding to the signal(s) to the terminal controller 280. Thereby, the terminal controller 280 may recognize, e.g., whether any region of the display module 241 is touched.

The sound output module 242 outputs data containing audio stored in the memory 250, or outputs sound informing the user of an operational state of the refrigerator 100. The sound output module 242 may include a receiver, a speaker, or a buzzer, for example.

The memory 250 may store a program for processing and control of the terminal controller 280, and may contain information related to food stored in the refrigerator 100.

In addition, the memory 250 stores graphic data to provide the user with various messages and information via various visual effects.

The above-described memory 250 may include a storage medium having at least one type among a flash memory type, a hard disk type, a multimedia card micro type, a card type of a memory (for example, an SD or XD memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disc, and an optical disc.

The interface unit 260 serves as a path to connect various external devices to the refrigerator terminal 200. The interface unit 260 may receive data or power from an external device, and transfer the data or power to each component in the terminal 200, or transmit internal data of the terminal 200 to an external device.

For example, the interface unit 260 may include a wired/wireless headset port, an external charger port, a wired/wireless data port, a memory card port, a port for connection of a device having an identification module, an audio Input/Output (I/O) port, a video I/O port, and an earphone port.

The terminal controller 280 typically controls an overall operation of the terminal 200.

The power supply unit 290 receives power applied from an external power source through the interface unit 260 and supplies the power to operate each component under control of the terminal controller 280.

Various exemplary embodiments described herein may be implemented in a recording medium capable of being read by a computer or a similar device using, e.g., software, hardware, or a combination thereof.

According to hardware implementation, exemplary embodiments described herein may be realized using at least one of Application Specific Integrated Circuits (ASICs), digital signal processors (DSPs), digital signal processing devices (DSPDs), programmable logic devices (PLDs), field programmable gate arrays (FPGAs), processors, controllers, micro-controllers, microprocessors, and an electric unit for performing other functions.

In some cases, exemplary embodiments described in the specification may be implemented by the terminal controller 280.

According to software implementation, exemplary embodiments with regard to procedures and functions described in the specification may be realized by separate software modules. Each of the software modules may perform at least one function and operation described in the specification.

Software code may be embodied as a software application that is written in an appropriate programming language. The software code may be stored in the memory 250, and may be executed by the terminal controller 280.

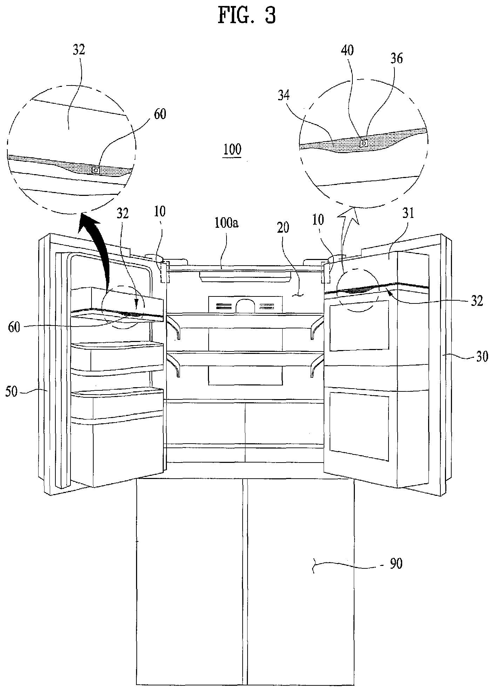

FIG. 3 is a schematic view of the refrigerator according to one embodiment of the present invention. A description with reference to FIG. 3 will follow.

The refrigerator 100 according to one embodiment of the present invention includes the main body 100a having a first storage compartment 20 and a second storage compartment 90 in which food is stored, a right door 30 installed to a right side of the main body 100a, and a left door 50 installed to a left side of the main body 100a, both the right and left doors 30 and 50 being provided to open or close the first storage compartment 20.

In this case, the right door 30 for the first storage compartment may be pivotally rotated about the right side of the first storage compartment 20 to open the first storage compartment 20, and the left door 50 for the first storage compartment may be pivotally rotated about the left side of the first storage compartment 20 to open the first storage compartment 20. The user may open the first storage compartment 20 by pivotally rotating both the right door 30 for the first storage compartment and the left door 50 for the first storage compartment when it is desired to check, e.g., the kind and quantity of food stored in the first storage compartment 20 and to access the food.

According to one embodiment of the present invention, the refrigerator 100 may include a first camera 40 installed to the right door 30 for the first storage compartment and a second camera 60 installed to the left door 50 for the first storage compartment.

Among plural components of a refrigerator, a door is a movable component. In particular, the door may open or close a storage compartment by being rotated about a single rotation axis. The door has a prescribed trajectory upon rotation, and therefore has less possibility of abnormal movement.

In the present embodiment, the first camera 40 may be installed to an inner surface of the right door 30 for the first storage compartment, i.e. a surface of the right door 30 facing the first storage compartment 20.

Similarly, the second camera 60 may be installed to an inner surface of the left door 50 for the first storage compartment, i.e. a surface of the left door 50 facing the first storage compartment 20.

Since the first camera 40 and the second camera 60 are installed respectively to the right door 30 for the first storage compartment and the left door 50 for the first storage compartment, the first camera 40 or the second camera 60 is pivotally rotated when the right door 30 for the first storage compartment or the left door 50 for the first storage compartment is pivotally rotated relative to the main body 100a.

In this case, the first camera 40 and the second camera 60 may take pictures plural times, thereby acquiring a plurality of pictures showing the interior of the refrigerator 100.

More specifically, the first camera 40 and the second camera 60 may be installed to racks 32 on which food is placed. As needed, the rack 32 may be provided with a cover 31 configured to enclose the top of the rack 32 so as to isolate food placed on the rack 32 from the interior of the first storage compartment 20 to some extent. The cover 31 may be pivotally rotated about one side of the rack 32 to allow the user to access food received inside the cover 31.

In particular, the rack 32 may include a decorative portion 34 at a front surface thereof. The decorative portion 34 is formed of an opaque material, and a transparent window 36 is provided at the decorative portion 34 to allow the first camera 40 or the second camera 60 to take a picture through the transparent window 36.

To drive the first camera 40 or the second camera 60, an electric wire for transmission of power and a control signal is necessary. Accordingly, the decorative portion 34 may be formed of an opaque material to prevent the user from viewing the interior of the rack 32. That is, the decorative portion 34 may ensure that the electric wire extending from the main body 100a to the first camera 40 or the second camera 60 is connected to the rack 32 without a risk of being exposed to the user.

In this case, since the first camera 40 or the second camera 60 is installed to take a picture through the transparent window 36, it is possible to prevent distortion of a picture due to the decorative portion 34.

Although FIG. 3 shows a state in which each of the first camera 40 and the second camera 60 is installed to a single rack 32 of each door 30 or 50, the first camera 40 or the second camera 60 may be installed to a plurality of racks of each door 30 or 50. More specifically, each of the right door 30 for the first storage compartment and the left door 50 for the first storage compartment includes a plurality of racks 32, and therefore a plurality of first cameras 40 or second cameras 60 may be provided at each door 30 or 50.

Normally, the plurality of racks 32 installed within the first storage compartment 20 is respectively full of food. Therefore, providing the plurality of first cameras 40 or second cameras 60 may allow the first cameras 40 or the second cameras 60 to take pictures at various heights, which may ensure more clear transmission of information related to the stored food to the user.

In addition, in the case in which the plurality of first cameras 40 or second cameras 60 is provided, the first cameras 40 or the second cameras 60 may be aligned in a single line. In this case, the single line may extend in a direction perpendicular to the main body 100a.

The first camera 40 and the second camera 60 may be installed at different heights. The right door 30 for the first storage compartment and the left door 50 for the first storage compartment may respectively include the racks 32 installed at different heights. Accordingly, to ensure that the first camera 40 and the second camera 60 installed at different heights take desired pictures respectively, an installation direction or a zoom-in or zoom-out function of each camera 40 or 60 may be controlled.

According to one embodiment of the present invention, the first storage compartment 20 and the second storage compartment 90 may define separate storage spaces. That is, the first storage compartment 20 and the second storage compartment 90 may be open or closed by different doors.

If the first storage compartment 20 is a refrigerating compartment, the second storage compartment 90 may be a freezing compartment. On the contrary, if the first storage compartment 20 is a freezing compartment, the second storage compartment 90 may be a refrigerating compartment.

Of course, if the first storage compartment 20 and the second storage compartment 90 may define separate spaces, both the first storage compartment 20 and the second storage compartment 90 may equally serve as refrigerating compartments or freezing compartments.

Each of the right door 30 for the first storage compartment and the left door 50 for the first storage compartment may be provided with a door rotation drive unit 10 configured to open or close the first storage compartment 20. That is, two door rotation drive units 10 may be provided to rotate the right door 30 for the first storage compartment and the left door 50 for the first storage compartment respectively.

The first storage compartment 20 may be open as each of the door rotation drive units 10 rotates the right door 30 for the first storage compartment or the left door 50 for the first storage compartment in a specific direction. On the other hand, the first storage compartment 20 may be closed as each of the door rotation drive units 10 rotates the right door 30 for the first storage compartment or the left door 50 for the first storage compartment in an opposite direction.

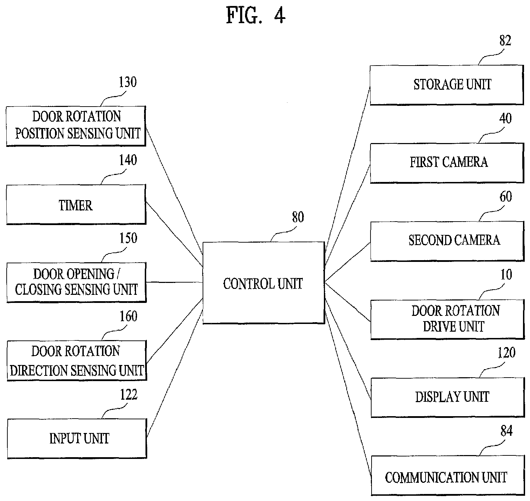

FIG. 4 is a control block diagram with regard to FIG. 3. A description with reference to FIG. 4 will follow.

According to one embodiment of the present invention, a control unit 80 may be provided to combine a plurality of pictures taken by the first camera 40 and the second camera 60 with one another, and to correct the pictures into an image showing an interior region of the first storage compartment 20 from the right door 30 to the left door 50.

The control unit 80 may combine a plurality of pictures taken by the first camera 40 and the second camera 60, thereby providing the user with an image that the user may easily and intuitively recognize. In this case, the control unit 80 may combine the plurality of pictures with one another, and correct the respective pictures. Alternatively, combination of the plurality of pictures may be implemented by an external control device provided at the outside of the refrigerator 100, rather than being implemented by the control unit 80.

According to one embodiment of the present invention, a door rotation position sensing unit 130 may be provided to sense a rotation position of the right door 30 for the first storage compartment or a rotation position of the left door 50 for the first storage compartment. The door rotation position sensing unit 130 may be integrated with the door rotation drive unit 10, and serve to sense whether or not the right door 30 for the first storage compartment or the left door 50 for the first storage compartment reaches a predetermined rotation position.

When the right door 30 for the first storage compartment or the left door 50 for the first storage compartment reaches a predetermined rotation position, the door rotation position sensing unit 130 may transmit a related signal to the control unit 80 to instruct the first camera 40 or the second camera 60 to take a picture.

In this case, a plurality of rotation positions is predetermined with respect to each of the right door 30 for the first storage compartment and the left door 50 for the first storage compartment. This allows the first camera 40 and the second camera 60 to take pictures plural times.

The door rotation position sensing unit 130 may include a Hall sensor using Hall effects. The Hall sensor may find the magnitude and direction of a magnetic field using Hall effects in which a potential difference is produced across a conductor carrying an electric current when a magnetic field is applied in a direction perpendicular to that of the current flow.

According to one embodiment of the present invention, a timer 140 may be provided to measure passage of time. In this case, although the timer 140 may measure general passage of time, the timer 140 may measure, in particular, moved time of the right door 30 for the first storage compartment or the left door 50 for the first storage compartment.

When moved time measured by the timer 140 exceeds a predetermined time, the timer 140 may transmit a related signal to the control unit 80 to allow the control unit 80 to instruct the first camera 40 or the second camera 60 to take a picture.

According to one embodiment of the present invention, a door opening/closing sensing unit 150 may be provided to sense opening or closing of the right door 30 for the first storage compartment or the left door 50 for the first storage compartment. The door opening/closing sensing unit 150 may sense whether or not the right door 30 for the first storage compartment or the left door 50 for the first storage compartment is released from contact with the main body 100a, for example, thereby sensing whether the right door 30 for the first storage compartment or the left door 50 for the first storage compartment opens or closes the first storage compartment 20.

The door opening/closing sensing unit 150 may transmit information related to opening or closing of the right door 30 or the left door 50 to the control unit 80.

According to one embodiment of the present invention, a door rotation direction sensing unit 160 may be provided to sense a rotation direction of the right door 30 for the first storage compartment or a rotation direction of the left door 50 for the first storage compartment. In this case, the door rotation direction sensing unit 160 may include a plurality of Hall sensors to sense a rotation position of the right door 30 or the left door 50 based on a position of the sequentially affected hall sensors.

The door rotation direction sensing unit 160 may sense a rotation direction of the right door 30 for the first storage compartment or the left door 50 for the first storage compartment, and transmit a related signal to the control unit 80. That is, the control unit 80 may detect a rotation direction of the right door 30 for the first storage compartment or the left door 50 for the first storage compartment under assistance of the door rotation direction sensing unit 160.

When each of the right door 30 for the first storage compartment and the left door 50 for the first storage compartment is rotated in a specific direction, the control unit 80 may determine that each of the right door 30 for the first storage compartment and the left door 50 for the first storage compartment is rotated to open the first storage compartment 20. On the other hand, when each of the right door 30 for the first storage compartment and the left door 50 for the first storage compartment is rotated in a direction opposite to the specific direction, the control unit 80 may determine that each of the right door 30 for the first storage compartment and the left door 50 for the first storage compartment is rotated to close the first storage compartment 20.

According to one embodiment of the present invention, a storage unit 82 may be provided to store an image corrected by the control unit 80. The storage unit 82 may store all images corrected by the control unit 80 including the most recently corrected image as well as previously corrected images.

The image stored in the storage unit 82 may be transmitted to the terminal 200 or the display unit 120, and the user may recognize information related to the interior of the refrigerator 100 via the terminal 200 or the display unit 120.

According to one embodiment of the present invention, the door rotation drive unit 10 may serve to drive the right door 30 for the first storage compartment or the left door 50 for the first storage compartment. In this case, the door rotation drive unit 10 may be driven in response to a signal input by the user via the input unit 122, thereby opening or closing the right door 30 for the first storage compartment or the left door 50 for the first storage compartment.

That is, the door rotation drive unit 10 may open or close the first storage compartment 20 by rotating the right door 30 for the first storage compartment or the left door 50 for the first storage compartment forward or in reverse.

In this case, the door rotation drive unit 10 may include a stepper motor. The stepper motor is a motor that is rotated by an angle proportional to a given pulse number based on the sequence of step pulses. That is, a rotation angle of the right door 30 or the left door 50 may be precisely controlled by applying a predetermined pulse to the stepper motor.

Through use of the door rotation drive unit 10 including the stepper motor, the door rotation drive unit 10 may sense a rotation direction and a rotation position of the right door 30 or the left door 50. That is, through use of the door rotation drive unit 10 including the stepper motor, the door rotation position sensing unit 130 and the door rotation direction sensing unit 160 of FIG. 4 may be omitted.

According to one embodiment of the present invention, a communication unit 84 may be provided to transmit an image corrected by the control unit 80 to an external device. In this case, the communication unit 84 may transmit a corrected image to the terminal communication unit 210 as exemplarily shown in FIG. 2.

In particular, the communication unit 84 may transmit, e.g., an image stored in the storage unit 82 or an image corrected by the control unit 80 to an external device provided at the outside of the refrigerator 100.

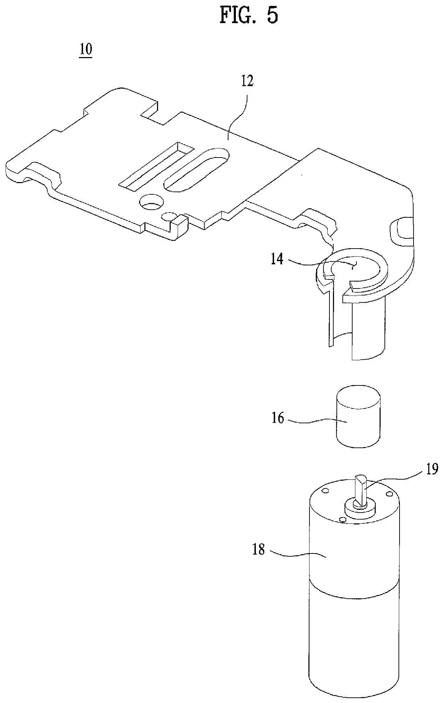

FIG. 5 is an explanatory view of the door rotation drive unit shown in FIG. 3. A description with reference to FIG. 5 will follow.

The door rotation drive unit 10 may include a bracket 12, one side of which is installed to the main body 100a, and a motor 18 connected to the bracket 12.

In this case, the motor 18 may be embedded in the right door 30 for the first storage compartment or the left door 50 for the first storage compartment. In particular, the motor 18 may be mounted at the center of rotation, about which the right door 30 for the first storage compartment or the left door 50 for the first storage compartment is rotated relative to the main body 100a. As such, the motor 18 may be rotated along with the right door 30 for the first storage compartment or the left door 50 for the first storage compartment.

The bracket 12 may have a cylindrical receiving groove 14, and a link crank 16 may be received in the receiving groove 14. A rotating shaft 19 of the motor 18 may be inserted into the link crank 16.

In this case, the link crank 16 may be fixed in the receiving groove 14 so as not to be rotatable relative to the receiving groove 14. Since the bracket 12 is fixed to the main body 100a, consequently, the link crank 16 is fixed to the main body 100a so as not to be pivotally rotated relative to the main body 100a.

That is, since the link crank 16 is kept stationary even if the rotating shaft 19 of the motor 18 is rotated, the motor 18 is rotated, and consequently the right door 30 for the first storage compartment or the left door 50 for the first storage compartment is rotated.

The motor 18 may be a stepper motor. That is, the motor 18 may rotate the right door 30 for the first storage compartment or the left door 50 for the first storage compartment by a predetermined angle, thereby controlling an opening degree of the first storage compartment 20.

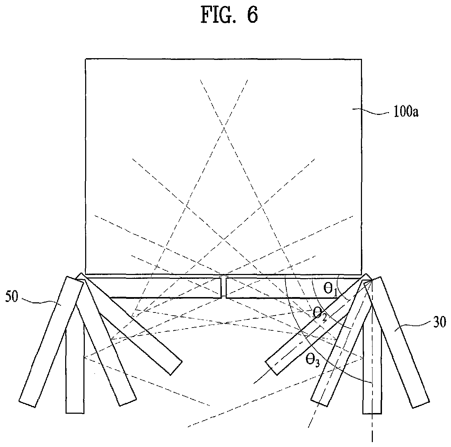

FIG. 6 is a schematic explanatory view of rotation of the refrigerator door. A description with reference to FIG. 6 will follow.

The right door 30 for the first storage compartment or the left door 50 for the first storage compartment is pivotally rotatable relative to the main body 100a, and the first camera 40 or the second camera 60 may take pictures plural times.

As exemplarily shown in FIG. 6, a region imaged by the first camera 40 or the second camera 60 may vary as the right door 30 for the first storage compartment or the left door 50 for the first storage compartment is rotated.

On the other hand, since the right door 30 for the first storage compartment or the left door 50 for the first storage compartment is rotated about a vertical axis of the main body 100a, each of the first camera 40 and the second camera 60 has a constant picture taking height even if the right door 30 for the first storage compartment or the left door 50 for the first storage compartment is rotated.

The first camera 40 may take a picture at least one time or more when the right door 30 for the first storage compartment is rotated relative to the main body 100a by an angle less than 90 degrees. This is because the first camera 40 may take a picture of the interior of the first storage compartment 20 or the interior of the left door 50 for the first storage compartment when the right door 30 for the first storage compartment is rotated relative to the main body 100a by an angle less than 90 degrees.

In particular, the first camera 40 may take pictures respectively when the right door 30 for the first storage compartment is rotated relative to the main body 100a by angles of 40 degrees, 65 degrees, and 90 degrees. At these positions of the right door 30 for the first storage compartment, the first camera 40 may take a picture of a region of the first storage compartment 20 proximate to the left door 50 for the first storage compartment and a picture of the interior of the left door 50 for the first storage compartment.

The second camera 60 may take a picture at least one time or more when the left door 50 for the first storage compartment is rotated relative to the main body 100a by an angle less than 90 degrees. This is because the second camera 60 may take a picture of the interior of the first storage compartment 20 or the interior of the right door 30 for the first storage compartment when the left door 50 for the first storage compartment is rotated relative to the main body 100a by an angle less than 90 degrees.

In particular, the second camera 60 may take pictures respectively when the left door 50 for the first storage compartment is rotated relative to the main body 100a by angles of 40 degrees, 65 degrees, and 90 degrees. At these positions of the left door 50 for the first storage compartment, the second camera 60 may take a picture of a region of the first storage compartment 20 proximate to the right door 30 for the first storage compartment and a picture of the interior of the right door 30 for the first storage compartment.

Although each of the first camera 40 and the second camera 60 is fixed to the right door 30 for the first storage compartment or the left door 50 for the first storage compartment, the first camera 40 and the second camera 60 may take pictures of various regions because the right door 30 for the first storage compartment and the left door 50 for the first storage compartment are rotated. That is, according to the present invention, it is possible to take pictures of several regions in which food is stored using the single first camera and the single second camera 60.

In addition, the first camera 40 and the second camera 60 may take pictures plural times based on a rotation duration of the right door 30 for the first storage compartment or the left door 50 for the first storage compartment.

More specifically, that opening of the right door 30 for the first storage compartment or the left door 50 for the first storage compartment may be sensed by the door opening/closing sensing unit 150. Then, as a prescribed time has passed after the door opening/closing opening unit 150 senses opening of the right door 30 for the first storage compartment or the left door 50 for the first storage compartment, the first camera 40 and the second camera 60 may take a picture.

In this case, the right door 30 for the first storage compartment or the left door 50 for the first storage compartment may be pivotally rotated by the door rotation drive unit 10. That is, the door rotation drive unit 10, which is driven by the motor 18, may have a predetermined angular velocity, and the first camera 40 and the second camera 60 may take pictures at desired positions based on a time interval measured by the timer 140.

The time interval measured by the timer 140 may be set in such a manner that a rotation angle of the right door 30 for the first storage compartment or the left door 50 for the first storage compartment with respect to the main body 100a is 40 degrees, 65 degrees, and 90 degrees. That is, when the right door 30 for the first storage compartment or the left door 50 for the first storage compartment is rotated by the door rotation drive unit 10, the timer 140 may set a point in time when each of the first camera 40 and the second camera 60 takes a picture.

When the door opening/closing sensing unit 150 senses opening of the right door 30 or the left door 50, the first camera 40 and the second camera 60 take a picture as the right door 30 for the first storage compartment or the left door 50 for the first storage compartment opens the first storage compartment 20. In this case, the first camera 40 and the second camera 60 may take pictures at door rotation angle of 40 degrees, 65 degrees, and 90 degrees in sequence.

In the above-described case, the door rotation direction sensing unit 160 may sense whether or not the right door 30 for the first storage compartment or the left door 50 for the first storage compartment is rotated in a direction to open the first storage compartment 20 based on a rotation direction of the right door 30 for the first storage compartment or the left door 50 for the first storage compartment.

Alternatively, the first camera 40 and the second camera 60 may take a picture when the right door 30 for the first storage compartment or the left door 50 for the first storage compartment is rotated in a direction to close the first storage compartment 20.

Typically, the user opens the right door 30 for the first storage compartment or the left door 50 for the first storage compartment, introduces food into or retrieves food from the first storage compartment 20, the right door 30 or the left door 50, and closes the right door 30 for the first storage compartment or the left door 50 for the first storage compartment. That is, the latest information related to food stored in the first storage compartment 20, the right door 30 for the first storage compartment or the left door 50 for the first storage compartment may be acquired when the user closes the right door 30 for the first storage compartment or the left door 50 for the first storage compartment.

If information related to food received in the first storage compartment 20, the right door 30 for the first storage compartment or the left door 50 for the first storage compartment is acquired when the right door 30 for the first storage compartment or the left door 50 for the first storage compartment is open, there is high likelihood of the corresponding information being changed.

In this way, according to the present invention, as the door rotation direction sensing unit 160 senses that the right door 30 for the first storage compartment or the left door 50 for the first storage compartment is rotated to close the first storage compartment 20, the first camera 40 or the second camera 60 may take a picture.

The door rotation direction sensing unit 160 may allow the first camera 40 and the second camera 60 to take pictures at the door rotation angles of 90 degrees, 65 degrees, and 40 degrees in sequence when the right door 30 for the first storage compartment or the left door 50 for the first storage compartment is rotated to close the first storage compartment 20. In this case, the first camera 40 and the second camera 60 takes pictures in a sequence opposite to the sequence of taking pictures when the right door 30 for the first storage compartment or the left door 50 for the first storage compartment opens the first storage compartment 20.

Even when the right door 30 for the first storage compartment or the left door 50 for the first storage compartment is rotated in a direction to close the first storage compartment 20, the timer 140 may begin to measure time when the right door 30 for the first storage compartment or the left door 50 for the first storage compartment has an angle of 90 degrees with respect to the main body 100a.

After a prescribed time has passed from time when the right door 30 or the left door 50 has an angle of 90 degrees with respect to the main body 100a, it may be determined that the right door 30 for the first storage compartment or the left door 50 for the first storage compartment has an angle of 65 degrees or 40 degrees, and at this time the first camera 40 or the second camera 60 may take a picture. In this case, the right door 30 for the first storage compartment or the left door 50 for the first storage compartment may be rotated at a constant angular velocity by the door rotation drive unit 10. That is, when the right door 30 for the first storage compartment or the left door 50 for the first storage compartment is rotated at a constant angular velocity, a rotation angle of the right door 30 for the first storage compartment or the left door 50 for the first storage compartment may be easily determined based on a time measured by the timer 140.

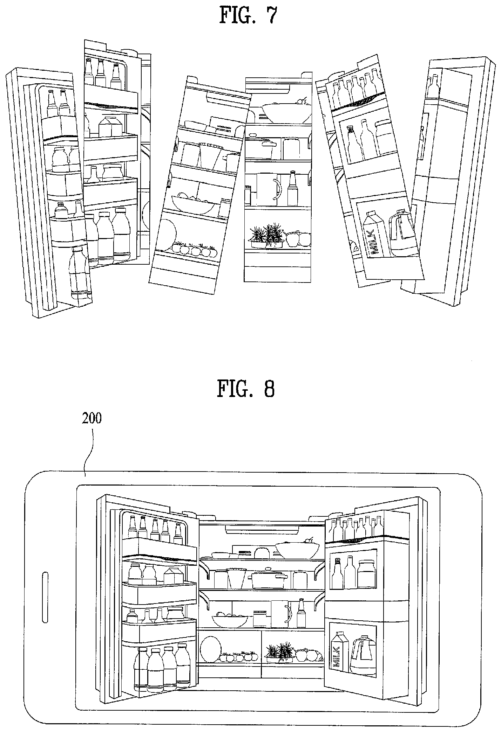

FIG. 7 is a view showing a plurality of pictures. A description with reference to FIG. 7 will follow.

As will be appreciated from FIG. 6, the first camera 40 and the second camera 60 may take pictures plural times as exemplarily shown in FIG. 7.

In FIG. 7, three left pictures may be taken by the first camera 40 and three right pictures may be taken by the second camera 60. That is, the six pictures taken by the first camera 40 and the second camera 60 may be combined with one another by the control unit 80.

Alternatively, instead of three pictures, each of the first camera 40 and the second camera 60 may take four or more pictures, or one or two pictures. That is, pictures taken by the first camera 40 and the second camera 60 may be controlled by controlling picture taking positions and the number of picture taking times of the first camera 40 and the second camera 60.

FIG. 8 is a view showing a state in which the pictures of FIG. 7 are corrected and transmitted to the terminal. A description with reference to FIG. 8 will follow.

Although FIG. 8 shows the terminal 200, the same information may be transmitted to the display unit 120 to allow the user to view the information.

In this case, the image contains content related to the interior of the first storage compartment 20. That is, the image may sequentially show, starting from the left side, the interior of the left door 50 for the first storage compartment, the interior of the first storage compartment 20, and the interior of the right door 30 for the first storage compartment.

In addition, the image may be shown as if the right door 30 for the first storage compartment and the right door 50 for the first storage compartment are open and exposed to the user. Accordingly, through a screen as if the user directly opens the right door 30 for the first storage compartment and the right door 50 for the first storage compartment, the user may intuitively and easily recognize information related to food stored in the refrigerator.

Meanwhile, the image may be a single panoramic picture. That is, the single picture may prevent unnecessary increase in photo capacity when the picture is transmitted to the user.

The user may recognize information related to the state, kind, and number of food stored in the first storage compartment 20 by simply viewing the image. Accordingly, it is unnecessary to frequently open the right door 30 or the left door 50 of the refrigerator 100, and energy consumption may be reduced by preventing leakage of cold air of the first storage compartment 20 due to opening of the right door 30 or the left door 50.

In addition, when the user is away from home, the user may determine food to be purchased and food not to be purchased using the image. Accordingly, waste of food due to repeated purchase and inconvenience caused when not purchasing necessary food may be prevented.

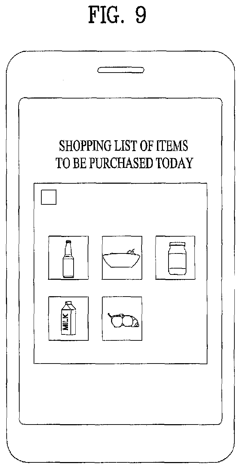

FIG. 9 is a view showing an implementation example that the user is usable in the state of FIG. 8. A description with reference to FIG. 9 will follow.

The image as exemplarily shown in FIG. 8 may be processed to provide the user with a shopping list of items that the user needs to purchase.

The shopping list of items may be produced and managed by the user as information related to food is directly extracted from the image, or as the user extracts information related to food and additionally inputs and manages the information.

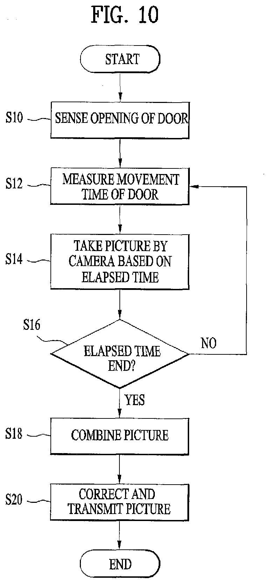

FIG. 10 is a control flowchart showing a picture taking process based on an elapsed time when a door is open according to one embodiment. A description with reference to FIG. 10 will follow.

First, the door opening/closing sensing unit 150 may sense opening or closing of the door (S10).

Next, the timer 140 measures movement time of the door when the door opening/closing sensing unit 150 senses opening or closing of the door (S12). The timer 140 may measure an elapsed time starting from a moment when the door begins to be open. Assuming that the door is rotated at a constant angular velocity by the door rotation drive unit 10, a rotation position of the door may be easily determined from the elapsed time.

Even if the door is not driven by the door rotation drive unit 10, a rotation position of the door based on an elapsed time may be predicted by calculate an average angular velocity of the refrigerator door when a person typically rotates the door.

The camera takes a picture based on the elapsed time measured by the timer 140 (S14). Since the first camera 40 and the second camera 60 are rotated along with the door, positions of the first camera 40 and the second camera 60 vary as time passes. Accordingly, the first camera 40 and the second camera 60 may take different pictures as time passes.

Then, it is determined whether or not the time measured by the timer 140 has passed (S16). If there remains time to take a picture by the first camera 40 and the second camera 60, movement time of the door is continuously measured (S12).

On the other hand, if the measured time has passed, it may be recognized that the first camera 40 and the second camera 60 take all pictures. That is, the first camera 40 and the second camera 60 no longer take pictures, and therefore the timer 140 no longer measures time.

Next, the control unit 80 combines the pictures taken by the first camera 40 and the second camera 60 (S18). FIG. 7 shows one example of the plurality of pictures.

Then, the control unit 80 may correct the plurality of combined pictures into an image as exemplarily shown in FIG. 8, and transmit the corrected image to the display unit 120 or to the terminal 200 via the communication unit 84 (S20).

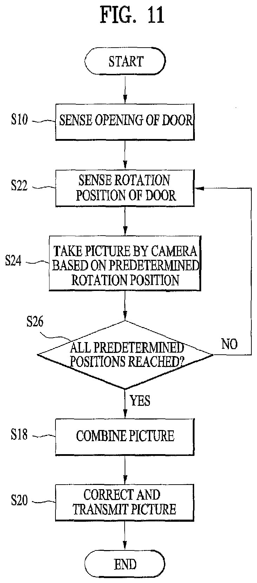

FIG. 11 is a control flowchart showing a picture taking process based on a rotation position of the door when the door is open according to one embodiment. A description with reference to FIG. 11 will follow.

In FIG. 11, instead of the time measured by the timer 140, the first camera 40 and the second camera 60 may take a picture based on a rotation position of the right door 30 for the first storage compartment and a rotation position of the left door 50 for the first storage compartment. For convenience of explanation, parts different from those of FIG. 10 will be described, and a description related to the other parts will be omitted hereinafter.

When opening of the door is sensed (S10), the door rotation position sensing unit 130 senses a rotation position of the right door 30 for the first storage compartment and a rotation position of the left door 30 for the first storage compartment (S22).

When the right door 30 for the first storage compartment and the left door 30 for the first storage compartment reach predetermined rotation positions, the first camera 40 and the second camera 60 take a picture (S24). Since a plurality of rotation positions may be predetermined, the first camera 40 and the second camera 60 may take pictures plural times.

Then, it is determined whether or not the right door 30 for the first storage compartment and the left door 50 for the first storage compartment reach all predetermined rotation positions (S26). That is, in the case in which the predetermined rotation positions are set to positions where the door is rotated by 40 degrees, 65 degrees, and 90 degrees with respect to the main body 100a, it may be determined whether or not the door reaches all positions corresponding to the respective angles.

If it is determined that the right door 30 for the first storage compartment and the left door 50 for the first storage compartment do not reach all the predetermined rotation positions, the door rotation position sensing unit 130 may continuously sense a rotation position of the right door 30 for the first storage compartment and a rotation position of the left door 50 for the first storage compartment.

If it is determined that the right door 30 for the first storage compartment and the left door 50 for the first storage compartment reach all the predetermined rotation positions, the control unit 80 may combine a plurality of pictures (S18).

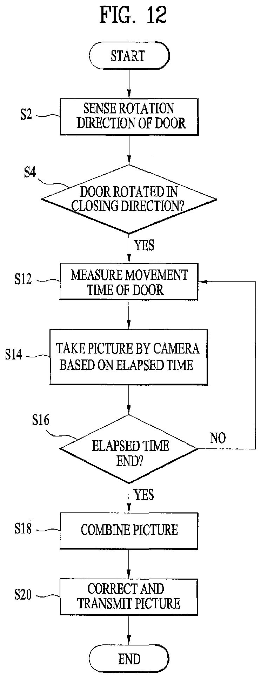

FIG. 12 is a control flowchart showing a picture taking process based on an elapsed time when the door is closed according to one embodiment. A description with reference to FIG. 12 will follow.

FIG. 12 is an explanatory view of a picture taking process of the first camera 40 and the second camera 60 when the door is rotated in a direction to close the first storage compartment 20, differently from that of FIG. 10. Accordingly, parts different from those of FIG. 10 will be described, and a description related to the same parts will be omitted hereinafter.

First, the door rotation direction sensing unit 160 may sense a rotation direction of the right door 30 for the first storage compartment and a rotation direction of the left door 50 for the first storage compartment (S2).

If it is determined that the right door 30 for the first storage compartment and the left door 50 for the first storage compartment are rotated in a direction to close the first storage compartment 20 (S4), movement time of the door may be measured to allow the first camera 40 and the second camera 60 to take a picture.

If it is determined that the right door 30 for the first storage compartment and the left door 50 for the first storage compartment are rotated in a direction to open the first storage compartment 20, the first camera 40 and the second camera 60 may take a picture in the same manner as the above description with reference to FIG. 10.

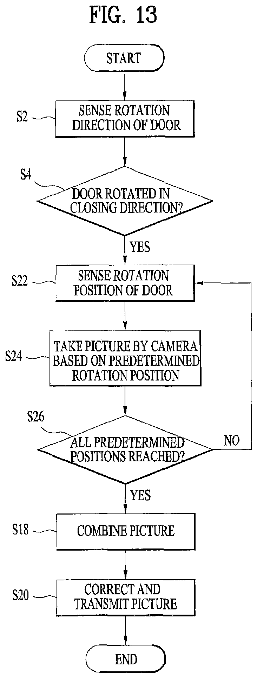

FIG. 13 is a control flowchart showing a picture taking process based on a rotation position of a door when the door is closed according to one embodiment. A description with reference to FIG. 13 will follow.

With reference to FIG. 13, a picture taking method of the first camera 40 and the second camera 60 when the door is rotated in a direction to close the first storage compartment 20 will be described. Accordingly, although the control flow of FIG. 13 is similar to that of FIG. 12, there is a difference in that the first camera 40 and the second camera 60 take a picture via sensing of a rotation position of the door.

That is, in the same manner as the above description with reference to FIG. 12, the door rotation direction sensing unit 160 may sense that the right door 30 for the first storage compartment and the left door 50 for the first storage compartment are rotated in a direction to close the first storage compartment 20.

Then, if it is determined that the right door 30 for the first storage compartment and the left door 50 for the first storage compartment are closing the first storage compartment 20, the first camera 40 and the second camera 60 may take a picture when the right door 30 for the first storage compartment and the left door 50 for the first storage compartment reach predetermined rotation positions thereof.

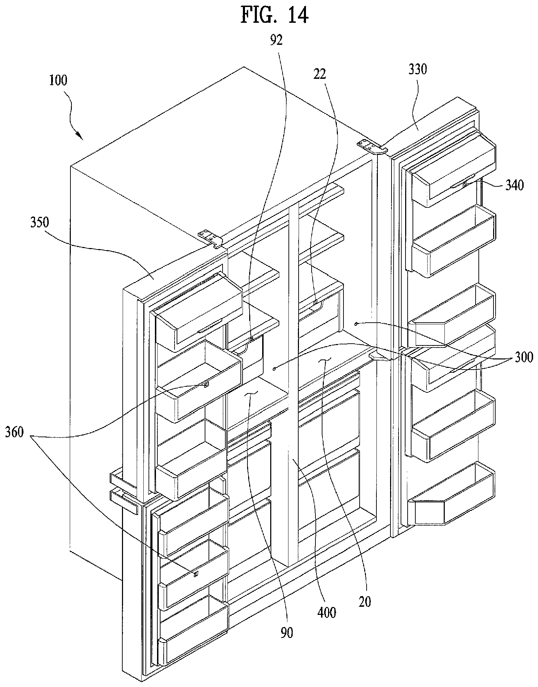

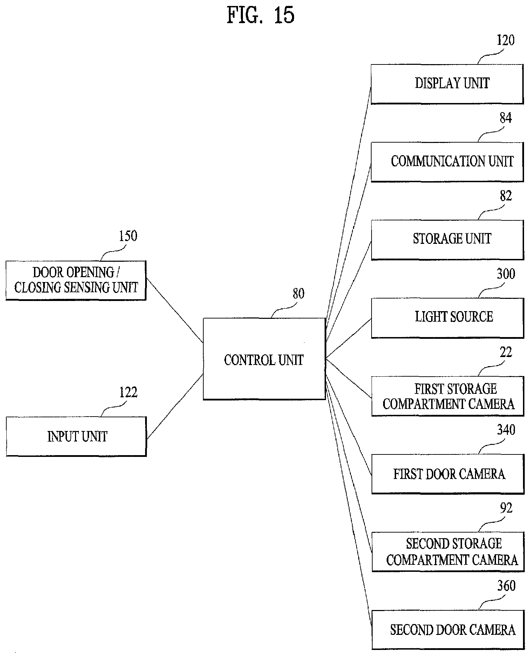

FIG. 14 is a schematic view of a refrigerator according to another embodiment of the present invention, and FIG. 15 is a control block diagram with regard to FIG. 14. A description with reference to FIGs. 14 and 15 will follow.

In another embodiment of the present invention, the same parts as those of the above-described embodiment are designated by the same reference numerals, and a description related to the same parts will be omitted hereinafter.

According to another embodiment of the present invention, the first storage compartment 20 and the second storage compartment 90 may define separate spaces divided by a barrier 400 which is vertically installed in the main body 100a. In this case, each of the first storage compartment 20 and the second storage compartment 90 may provide a space in which food is stored, and may serve as a refrigerating compartment or a freezing compartment.

The first storage compartment 20 may be open or closed by a first door 330, and the second storage compartment 90 may be open or closed by a second door 350. In this case, the first door 330 and the second door 350 may be rotated relative to the main body 100a.

The first storage compartment 20 and the second storage compartment 90 may be provided with cameras. The first storage compartment 20 may be provided with a first storage compartment camera 22, and the second storage compartment 90 may be provided with a second storage compartment camera 92.

In this case, the first storage compartment camera 22 may take a picture of the interior of the first door 330, and the second storage compartment camera 92 may take a picture of the interior of the second door 350. That is, the first storage compartment camera 22 is arranged to take a picture of food stored in the first door 330, and the second storage compartment camera 92 is arranged to take a picture of food stored in the second door 350.

The first door 330 and the second door 350 are respectively provided with door cameras. The first door 330 is provided with a first door camera 340 and the second door 350 is provided with a second door camera 360.

In this case, the first door camera 340 may take a picture of the first storage compartment 20, and the second door camera 360 may take a picture of the second storage compartment 90. That is, the first door camera 340 is arranged to take a picture of food stored in the first storage compartment 20, and the second door camera 360 is arranged to take a picture of food stored in the second storage compartment 90.

According to another embodiment of the present invention, the refrigerator 100 may include a light source 300 installed in the main body 100a to emit light. The light source 300 may emit light to allow the user to view food stored in the first storage compartment 20 or the second storage compartment 90 when the user opens the first door 330 or the second door 350.

That is, the light source 300 may be driven when the door opening/closing sensing unit 150 senses opening of the first door 330 or the second door 350 and the first door 330 or the second door 350 is open.

In addition, the light source 300 may be driven when the user tries to check food stored in the first storage compartment 20 and the second storage compartment 90 as well as food stored in the first door 330 and the second door 350.

That is, according to another embodiment of the present invention, even in a state in which the first door 330 and the second door 350 close the first storage compartment 20 and the second storage compartment 90, the light source 300 may be driven. Once the light source 300 is driven, the first storage compartment camera 22, the second storage compartment camera 92, the first door camera 340, and the second door camera 360 may take a picture.

That is, the door opening/closing sensing unit 150 may determine that the first door 330 or the second door 350 closes the first storage compartment 20 or the second storage compartment 90 respectively. In this case, the light source 300 may be driven, and the first storage compartment camera 22, the second storage compartment camera 92, the first door camera 340, and the second door camera 360 may take a picture.

In a closed state of the first door 330 and the second door 350, the interior of the first storage compartment 20 and the second storage compartment 90 is dark, and therefore taking a picture containing information with desired resolution may be impossible. To solve this problem, according to another embodiment of the present invention, the light source 300 is driven in a closed state of the first door 330 and the second door 350.

Meanwhile, each of the first storage compartment camera 22, the second storage compartment camera 92, the first door camera 340, and the second door camera 360 may be provided plural in number. In this case, each of the plurality of first storage compartment cameras 22, the second storage compartment cameras 92, the first door cameras 340, and the second door cameras 360 may be arranged in a line or in plural lines to simultaneously take a plurality of pictures.

The control unit 80 may combine and correct pictures taken by the first storage compartment camera 22, the second storage compartment camera 92, the first door camera 340, and the second door camera 360.

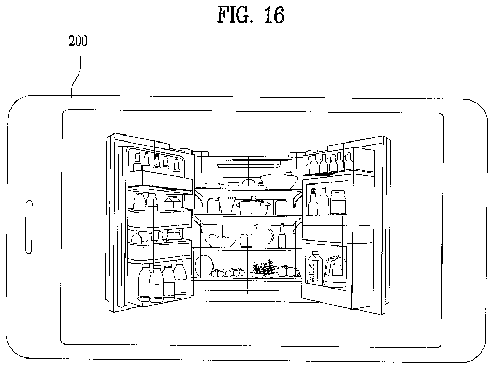

In this case, an image combined and corrected by the control unit 80 may be transmitted to the user terminal 200. For example, an image as exemplarily shown in FIG. 16 may be transmitted to the user terminal 200.

The image sequentially shows, starting from the left side, the interior of the second door 350, the interior of the second storage compartment 90, the interior of the first storage compartment 20, and the interior of the first door 330. That is, the image shows a state in which the user opens the first door 330 and the second door 350, and therefore the user may intuitively recognize information related to the kind, state, and number of food stored in the refrigerator 100 from the image.

That is, according to another embodiment of the present invention, the user may acquire information related to food stored in the refrigerator 100 without opening the first door 330 and the second door 350.

In addition, according to another embodiment of the present invention, differently from the above-described embodiment, information related to the interior of the refrigerator 100 may be acquired from pictures taken in a closed state of the first door 330 and the second door 350.

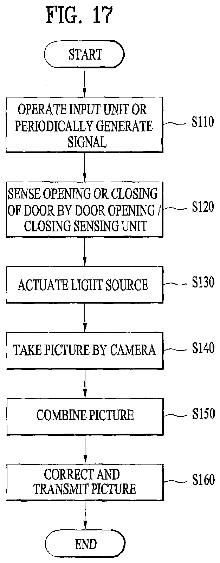

FIG. 17 is a control flowchart according to another embodiment of the present invention. The control flow according to another embodiment of the present invention will be described with reference to FIG. 17.

The user may operate the input unit 122, or generation of a signal at a prescribed interval may be set (S110). In this case, the user may acquire information related to food stored in the refrigerator by operating the input unit 122 or based on periodically generated signals.

In response to a signal to instruct the camera to take a picture, the door opening/closing sensing unit 150 may sense opening or closing of the first door 330 or the second door 350.

If it is determined that the first door 330 or the second door 350 is closed, the light source 300 is actuated (S130). This is because the first storage compartment 20 and the second storage compartment 90 are dark in a closed state of the first door 330 and the second door 350.

Once the light source 300 is actuated, the first storage compartment 20 and the second storage compartment 90 have sufficient luminance, and the first door camera 340, the second door camera 360, the first storage compartment camera 22, and the second storage compartment camera 92 may be operated to take a picture (S140).

In this case, since the first door camera 340, the second door camera 360, the first storage compartment camera 22, and the second storage compartment camera 92 are kept stationary, each camera may take a picture only one time. This is because only the same picture is acquired in a stationary state of the camera even if the camera takes plictures plural times.

The control unit 80 combines pictures taken by the first door camera 340, the second door camera 360, the first storage compartment camera 22, and the second storage compartment camera 92 with one another (S150).

Then, the control unit 80 may correct the combined pictures into an image, and transmit the corrected image to the display unit 120 or the terminal 200 via the communication unit 84 (S160).

In this case, the corrected image may be stored in the storage unit 82, which enables history management of respective images.

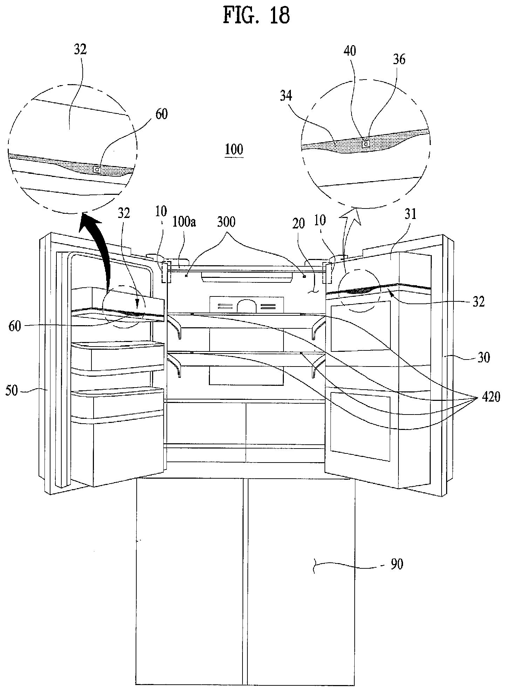

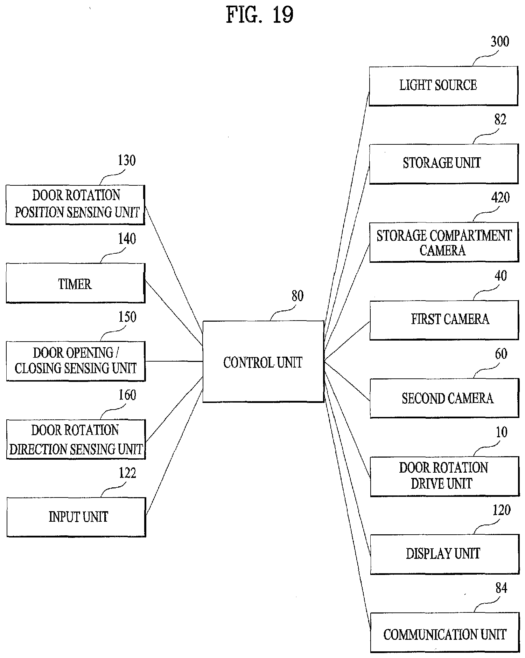

FIG. 18 is a schematic view of a refrigerator according to a further embodiment of the present invention, and FIG. 19 is a control block diagram according to a further embodiment of the present invention. A description with reference to FIGs. 18 and 19 will follow.

A further embodiment of the present invention may be applied to the refrigerator having a configuration as described above according to the firstly described embodiment of the present invention, and employ a combined picture taking method of both picture taking methods according to the firstly described embodiment and the secondly described embodiment. That is, a further embodiment of the present invention may be applied to the refrigerator having a configuration as exemplarily shown in FIG. 3 according to the firstly described embodiment.

In addition, according to a further embodiment of the present invention, information related to food stored in a refrigerating compartment or a freezing compartment may be acquired in a closed state of the door, similar to that in the secondly described embodiment of the present invention.

A further embodiment of the present invention is a combination of the firstly described embodiment and the secondly described embodiment of the present invention, and thus a detailed description related to respective components will be omitted hereinafter. However, it will be appreciated that the components according to a further embodiment of the present invention perform the same function as the above-described components, and thus the above description may be equally applied.

According to a further embodiment of the present invention, in addition to the first camera 40 installed to the right door 30 for the first storage compartment and the second camera 60 installed to the left door 50 for the first storage compartment, a storage compartment camera 420 may be installed to take a picture of the interior of the right door 30 for the first storage compartment and the interior of the left door 50 for the first storage compartment. In this case, a plurality of storage compartment cameras 420 may be arranged in plural lines.

More specifically, according to a further embodiment of the present invention, as exemplarily shown in FIG. 6, the right door 30 for the first storage compartment and the left door 50 for the first storage compartment are pivotally rotated to allow the first camera 40 and the second camera 60 to take a picture, which may result in generation of an image as exemplarily shown in FIG. 8. In this case, the image may sequentially show, starting from the left side, the interior of the left door 50 for the first storage compartment, the interior of the first storage compartment 20, and the interior of the right door 30 for the first storage compartment.

In addition, according to a further embodiment of the present invention, the light source 300 may be actuated as described above with reference to FIG. 16, and the storage compartment camera 420, the first camera 40 and the second camera 60 may be driven to take a picture, which may result in generation of an image as exemplarily shown in FIG. 8.

In a further embodiment of the present invention, the user may acquire information related to food stored in the refrigerator 100 based on pictures taken via pivotal rotation of the door. In addition, the user may acquire information related to food stored in the refrigerator 100 even in a state in which the door closes the storage compartment.

As is apparent from the above description, according to the present invention, a user may recognize information related to food stored in a refrigerator even if the user does not open a refrigerator door.

Further, according to the present invention, even when the user is away from home, the user may recognize information related to food stored in the refrigerator via a portable terminal.

Furthermore, according to the present invention, the user may view a screen similar to that when the user directly opens the refrigerator, which assists the user in easily recognizing the interior state of the refrigerator.

It will be apparent that, although the preferred embodiments have been shown and described above, the invention is not limited to the above-described specific embodiments, and various modifications and variations can be made by those skilled in the art.

## Claims

1. A refrigerator (100) comprising:
a main body (100a) having a storage compartment (20; 90) in which food is stored;
a door (330; 350) configured to open or close the storage compartment (20; 90);
a storage compartment camera (22; 92) installed in the storage compartment (20; 90);
a door camera (340; 360) installed to the door (330; 350);
a control unit (80) configured to combine a plurality of pictures taken by the storage compartment camera (22; 92) and the door camera (340; 360) with one another and correct the pictures into an image showing the door (330; 350) and the storage compartment (20; 90); and
a door opening/closing sensing unit (150) configured to sense opening or closing of the door (330; 350).

2. The refrigerator according to claim 1, when the storage compartment camera (22; 92) and the door camera (340; 360) take a picture when the door opening/closing sensing unit (150) senses that the door (330; 350) closes the storage compartment (20; 90).

## Patentansprüche

1. Kühlschrank (100), der Folgendes umfasst:
einen Hauptkörper (100a), der ein Vorratsfach (20; 90) aufweist, in dem Lebensmittel gelagert werden;
eine Tür (330; 350), die konfiguriert ist, das Vorratsfach (20; 90) zu öffnen oder zu schließen;
eine Vorratsfach-Kamera (22; 92), die in dem Vorratsfach (20; 90) installiert ist;
eine Tür-Kamera (340; 360), die an der Tür (330; 350) installiert ist;
eine Steuereinheit (80), die konfiguriert ist, mehrere Bilder, die durch die Vorratsfach-Kamera (22; 92) und die Tür-Kamera (340; 360) aufgenommen wurden, miteinander zu kombinieren und die Bilder in eine Abbildung zu ändern, die die Tür (330; 350) und das Vorratsfach (20; 90) zeigt; und
eine Einheit (150) zum Erfassen des Öffnens bzw. Schließens der Tür, die konfiguriert ist, das Öffnen oder Schließen der Tür (330; 350) zu erfassen.

2. Kühlschrank nach Anspruch 1, wobei die Vorratsfach-Kamera (22; 92) und die Tür-Kamera (340; 360) ein Bild aufnehmen, wenn die Einheit (150) zum Erfassen des Öffnens bzw. Schließens der Tür erfasst, dass die Tür (330; 350) das Vorratsfach (20; 90) schließt.

## Revendications

1. Réfrigérateur (100) comportant :
un corps principal (100a) ayant un compartiment de stockage (20 ; 90) dans lequel des aliments sont stockés ;
une porte (330 ; 350) configurée pour ouvrir ou fermer le compartiment de stockage (20 ; 90) ;
un appareil de prise de vues de compartiment de stockage (22 ; 92) installé dans le compartiment de stockage (20 ; 90) ;
un appareil de prise de vues de porte (340 ; 360) installé sur la porte (330 ; 350) ;
une unité de commande (80) configurée pour combiner une pluralité de photographies prises par l'appareil de prise de vues de compartiment de stockage (22 ; 92) et l'appareil de prise de vues de porte (340 ; 360) les unes avec les autres et corriger les photographies dans une image montrant la porte (330 ; 350) et le compartiment de stockage (20 ; 90) ; et
une unité de détection d'ouverture/de fermeture de porte (150) configurée pour détecter une ouverture ou une fermeture de la porte (330 ; 350).

2. Réfrigérateur selon la revendication 1, dans lequel l'appareil de prise de vues de compartiment de stockage (22 ; 92) et l'appareil de prise de vues de porte (340 ; 360) prennent une photographie lorsque l'unité de détection d'ouverture/de fermeture de porte (150) détecte que la porte (330 ; 350) ferme le compartiment de stockage (20 ; 90).
